# EUROPÄISCHE PATENTSCHRIFT

(11) **EP 1 851 233 B1**
(45) Veröffentlichungstag und Bekanntmachung des Hinweises auf die Patenterteilung: **03.09.2008**
(21) Anmeldenummer: 06708152.1
(22) Anmeldetag: 09.02.2006
(51) Int. Cl.: C07F 9/50

(54) **VERFAHREN ZUR HERSTELLUNG TERTIRER PHOSPHINE**
METHOD FOR PRODUCING TERTIARY PHOSPHINES
PROCEDE DE FABRICATION DE PHOSPHINES TERTIAIRES

(30) Priorität: 10.02.2005 DE 102005005946
(43) Veröffentlichungstag der Anmeldung: 07.11.2007
(73) Patentinhaber: BASF SE, 67056 Ludwigshafen (DE)
(72) Erfinder: WISSEL, Kathrin, 63450 Hanau (DE); MAASE, Matthias, 67346 Speyer (DE); HUTTENLOCH, Oliver, 75228 Ispringen (DE); FLAJS, Toni, 67112 Mutterstadt (DE); KUHL, Melanie, 67069 Ludwigshafen (DE)
(86) Internationale Anmeldenummer: PCT/EP2006/050808
(87) Internationale Veröffentlichungsnummer: WO 2006/084878

(56) Entgegenhaltungen:
- EP-A- 0 196 742
- WO-A-00/05187
- WO-A-00/08030
- WO-A-00/32612
- WO-A-93/15089
- WO-A-20/05014606
- DE-A1- 2 050 095
- US-A- 3 751 881
- "6th Edition, Chapter 2.2.2 Tertiary Phosphines" 2003, ULLMANN'S ENCYCLOPEDIA OF INDUSTRIAL CHEMISTRY 26 , XP002376472 Seite 215 - Seite 239

## Beschreibung

Verfahren zur Herstellung tertiärer Phosphine durch Umsetzung einer Verbindung der allgemeinen Formel (I) 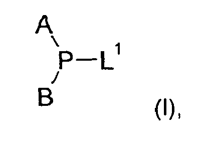 in der
- A für R¹ oder L²,
- B für R² oder L³,
- die Reste R¹ und R² unabhängig voneinander für einen organischen Rest mit jeweils 1 bis 30 Kohlenstoffatomen, wobei die Reste R¹ und R² auch miteinander verbunden sein können; und
- die Abgangsgruppen L¹ bis L³ unabhängig voneinander für Halogen, Alkyloxy mit 1 bis 10 Kohlenstoffatomen oder Aryloxy mit 6 bis 10 Kohlenstoffatomen
stehen,
(a) mit einem Alkalimetall in einem organischen aprotischen Lösungsmittel und
(b) einer Verbindung der allgemeinen Formel (II)

   L⁴——R³ (II),

   in der
   - der Rest R³ für einen organischen Rest mit jeweils 1 bis 30 Kohlenstoffatomen; und
   - die Abgangsgruppe L⁴ für Halogen, Alkyloxy mit 1 bis 10 Kohlenstoffatomen oder Aryloxy mit 6 bis 10 Kohlenstoffatomen
   stehen,
Tertiäre Phosphine stellen eine wichtige Verbindungsklasse mit vielfältigen Einsatzmöglichkeiten dar. So werden diese beispielsweise in der Synthese von Phosphinoxiden und Phosphoniumsalzen eingesetzt. Eine besonders bedeutende Anwendung der tertiären Phosphine ist deren Einsatz als Ligand in diversen Katalysatorsystemen, insbesondere zur Hydroformylierung, Carbonylierung, Hydrierung und Oligomerisierung.

Zur Herstellung tertiärer Phosphine sind im Stand der Technik verschiedene Synthesewege bekannt und etwa in Ullmann's Encyclopedia of Industrial Chemistry, 6th edition, 2000 Electronic Release, Chapter "PHOSPHORUS COMPOUNDS, ORGANIC - Phosphines" beschrieben. So können diese beispielsweise durch Addition ungesättigter Verbindungen an Phosphine (PH₃ oder durch organische Reste subsituierte -PH₂ oder >PH Verbindungen) erhalten werden. Ein anderer Syntheseweg geht von Phosphorchloriden (PCl₃ oder durch organische Reste subsituierte -PCl₂ oder >PCI Verbindungen) aus, bei dem diese mit einer Grignard-Verbindung zum gewünschten Phosphin umgesetzt werden. In einer dritten Synthesemöglichkeit geht man ebenfalls von Phosphorchloriden wie oben genannt aus und setzt diese in Gegenwart eines Metalls als Reduktionsmittel, wie beispielsweise Zink, Kupfer, Lithium oder Natrium mit einer organischen Chlorverbindung zum gewünschten Phosphin um.

Gemäß einem vierten Syntheseweg, welcher in EP-A 0 280 380, WO 99/51614 und W. Wolfsberger et al., Chemiker-Zeitung 115, 1991, Seite 7 bis 13 beschrieben ist, können asymmetrisch subsituierte Diphenylphosphine des Typs -P(C₆H₅)₂ durch Umsetzung von Triphenylphosphin mit Natrium in flüssigem Ammoniak unter Bildung von (C₆H₅)₂PNa und anschließender Umsetzung mit einer organischen Chlorverbindung zum gewünschten Phosphin erhalten werden.

WO 00/32612 und PCT/EP 04/08497 offenbaren die Synthese von Mono- und Bis-(acyl)phosphinen durch Umsetzung der entsprechenden Mono- und Dihalogenophosphine mit einem Alkalimetall in einem Lösungsmittel und nachfolgender Umsetzung des Reaktionsgemisches mit dem entsprechenden Acylhalogenid. WO 00/32612 lehrt den Einsatz von Ethern, insbesondere von Tetrahydrofuran, und PCT/EP 04/08497 den Einsatz von aliphatischen und aromatischen Kohlenwasserstoffen sowie von Ethern, insbesondere von Toluol und Ethylbenzol, als Lösungsmittel. PCT/EP 04/08497 lehrt ferner in Bezug auf das einzusetzende Alkalimetall, dass dieses suspendiert im Lösungsmittel in fein verteilter Form in aufgeschmolzenem Zustand mit einem mittleren Partikeldurchmesser von ≤ 500 µm einzusetzen sei. Derart fein verteiltes Alkalimetall ist beispielsweise durch Einsatz eines besonders schnelldrehenden Rührers erhältlich. Gemäß der Lehre von PCT/EP 04/08497 wird das erhaltene Reaktionsgemisch mit Wasser hydrolysiert und das gewünschte Mono- oder Bis(acyl)phosphin aus der organischen Phase isoliert.

DE 2 050 095 beschreibt die Herstellung von Triphenylphosphin durch Umsetzung von Phosphortrichlorid mit Natrium in einem aliphatischen, cycloaliphatischen oder aromatischen Lösungsmittel und Chlorbenzol. Gemäß der Lehre von DE 2 050 095 wird das erhaltene Reaktionsgemisch mit Wasser hydrolysiert und Triphenylphosphin aus der organischen Phase isoliert.

WO 00/08030 offenbart die Herstellung asymmetrich substituierter Phosphine durch Umsetzung eines organischen Phosphins, welches eine Abgangsgruppe am Phosphor, wie beispielsweise einer Amino-, Alkoxy- oder Aryloxy-Gruppe, aufweist, mit einem Alkalimetall in einem Lösungsmittel und nachfolgender Umsetzung mit einer organischen Chlorverbindung zum gewünschten Phosphin. Ebenso beschrieben ist auch die Darstellung von Diphosphinen, bei der anstelle der organischen Chlorverbindung eine organische Dichlorverbindung einzusetzen ist. Gemäß der Lehre von WO 00/08030 wird das erhaltene Reaktionsgemisch jeweils mit Wasser hydrolysiert und das gewünschte asymmetrich substituierte Phosphin aus der organischen Phase isoliert.

EP-A 0 196 742 offenbart die Synthese von Alkyldiarylphosphinen durch Umsetzung von Diarylhalogenophosphin mit einem Alkalimetall in einem Lösungsmittel und nachfolgender Umsetzung mit einem Alkylchlorid zum gewünschten Alkyldiarylphosphin. EP-A 0 196 742 lehrt in Bezug auf das einzusetzende Alkalimetall, dass dieses suspendiert im Lösungsmittel bevorzugt in aufgeschmolzenem Zustand und in fein verteilter Form mit einem mittleren Partikeldurchmesser von bevorzugt ≤ 1000 µm einzusetzen sei. Als geeignete Lösungsmittel sind polare Lösungsmittel, wie etwa Di-n-butylether, und unpolare Lösungsmittel, wie etwa Toluol, genannt. Gemäß der Lehre von EP-A 0 196 742 wird das erhaltene Reaktionsgemisch mit Wasser hydrolysiert und das gewünschte Alkyldiarylphosphin aus der organischen Phase isoliert.

US 3,751,481 beschreibt die Synthese von asymmetrich substituierten Phosphinen durch Umsetzung von Monoaryl-dihalogenophosphin beziehungsweise von Diarylmonohalogenophosphin mit Natrium in einem Kohlenwasserstoff als Lösungsmittel und nachfolgender Umsetzung mit einer organischen Chlorverbindung zum gewünschten Phosphin. US 3,751,481 lehrt in Bezug auf das einzusetzende Natrium-Metall, dass dieses suspendiert im Lösungsmittel bevorzugt in aufgeschmolzenem Zustand und in fein verteilter Form mit einem mittleren Partikeldurchmesser von bevorzugt ≤ 1 mm einzusetzen sei. Gemäß der Lehre von US 3,751,481 wird das erhaltene Reaktionsgemisch mit Wasser hydrolysiert und das gewünschte Phosphin aus der organischen Phase isoliert.

Nachteilig an den oben genannten Verfahren ist der im Reaktionsgemisch vorliegende Restgehalt an elementarem Alkalimetall durch dessen Einsatz im Überschuss. Dieser stellt insbesondere bei der Produktion technischer Mengen im Bereich von einigen Kilogramm bis zu mehreren Tonnen pro Tag aufgrund seiner hohen Reaktivität auch bei der anschließenden Aufarbeitung des Reaktionsgemisches eine große sicherheitstechnische Herausforderung dar.

Aufgabe der vorliegenden Erfindung war es, ein Verfahren zur Herstellung tertiärer Phosphine zu finden, welches die Nachteile aus dem Stand der Technik nicht besitzt, eine hohe Flexiblität hinsichtlich der chemischen Natur der herzustellenden tertiären Phosphine aufweist und insbesondere auch die Herstellung asymmetrisch substituierter Phosphine sowie von Di- und Oligophosphinen gestattet, eine hohe Ausbeute, hohe Reinheit und hohe Raum-Zeit-Ausbeute der gewünschten tertiären Phosphine ermöglicht, sicherheitstechnisch gut beherrschbar ist und auch die Produktion technischer Mengen im Bereich von einigen Kilogramm bis zu mehreren Tonnen pro Tag möglich macht.

Demgemäß wurde ein Verfahren zur Herstellung tertiärer Phosphine durch Umsetzung einer Verbindung der allgemeinen Formel (I) 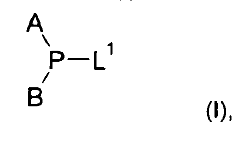 in der
- A für R¹ oder L²,
- B für R² oder L³,
- die Reste R¹ und R² unabhängig voneinander für einen organischen Rest mit jeweils 1 bis 30 Kohlenstoffatomen, wobei die Reste R¹ und R² auch miteinander verbunden sein können; und
- die Abgangsgruppen L¹ bis L³ unabhängig voneinander für Halogen, Alkyloxy mit 1 bis 10 Kohlenstoffatomen oder Aryloxy mit 6 bis 10 Kohlenstoffatomen
stehen,
(a) mit einem Alkalimetall in einem organischen aprotischen Lösungsmittel und
(b) einer Verbindung der allgemeinen Formel (II)

   L⁴―R³ (II),
in der
- der Rest R³ für einen organischen Rest mit jeweils 1 bis 30 Kohlenstoffatomen; und
- die Abgangsgruppe L⁴ für Halogen, Alkyloxy mit 1 bis 10 Kohlenstoffatomen oder Aryloxy mit 6 bis 10 Kohlenstoffatomen
stehen,
gefunden, das dadurch gekennzeichnet ist, dass man das erhaltene Reaktionsgemisch mit einer wässrigen Base, welche einen pH-Wert von ≥ 10 aufweist, hydrolysiert und die organische Phase von der wässrigen Phase abtrennt.

Die beim erfindungsgemäßen Verfahren einzusetzende wässrige Base weist bevorzugt einen pH-Wert von 10 bis 15, besonders bevorzugt von 11 bis 15, ganz besonders bevorzugt von 12 bis 15 und insbesondere 13 bis 15, jeweils gemessen bei 25°C, auf. Entsprechend der genannten pH-Bereiche weist die einzusetzende wässrige Base eine Hydroxidionen-Konzentration von im Allgemeinen ≥ 0,0001 Mol/L, bevorzugt von 0,0001 bis 10 Mol/L, besonders bevorzugt von 0,001 bis 10 Mol/L, ganz besonders bevorzugt von 0,01 bis 10 Mol/L und insbesondere von 0,1 bis 10 Mol/L auf.

Als wässrige Basen können prinzipiell alle in Wasser lösliche Basen eingesetzt werden, welche das genannte Kriterium bezüglich des pH-Wertes erfüllen. Als Beispiele für die einsetzbaren Basen seien Alkalilauge (Alkalimetallhydroxide), Erdalkalimetallhydroxide, Ammoniakwasser, Amine wie beispielsweise Methylamin, Dimethylamin, Trimethylamin, Ethylamin, Diethylamin und Triethylamin, aber auch basisch wirkende Salze wie etwa Alkalimetallcarbonate und Alkalimetallphosphate genannt. Bevorzugt setzt man beim erfindungsgemäßen Verfahren wässrige Alkalilauge, besonders bevorzugt Natronlauge und Kalilauge und ganz besonders bevorzugt Natronlauge ein.

Die Menge der wässrigen Base ist im Allgemeinen so bemessen, dass die darin vorhandene Menge an Wasser mindestens dazu ausreicht, das gegebenenfalls im Reaktionsgemisch überschüssig vorhandene Alkalimetall unter Bildung von Wasserstoff zum Alkalimetallhydroxid zu hydrolysieren. Bevorzugt ist die Menge der wässrigen Base so bemessen, dass die darin vorhandene Menge an Wasser zudem auch mindestens ausreicht, die bei der Umsetzung gebildeten Nebenproduktsalze umfassend ein Alkalimetallkation und ein Anion vom Typ [L¹]⁻, [L²]⁻, [L³]⁻ oder [L⁴]⁻ zu hydrolysieren, sofern das gebildete Anion in Wasser hydrolysierbar ist. Letzteres ist beispielsweise beim Einsatz von Alkyloxy- und Aryloxygruppen als Abgangsgruppen der Fall, da diese im Reaktionsgemisch zur Bildung der entsprechenden Alkyloxid- und Aryloxidanionen führen. Besonders bevorzugt ist die Menge der wässrigen Base so bemessen, dass die darin vorhandene Menge an Wasser zudem auch mindestens ausreicht, die ursprünglich eingesetzte Base, sämtliche Hydrolyseprodukte und sämtliche wassergängigen Nebenprodukte unter den vorliegenden Bedingungen gelöst zu halten. Im Allgemeinen hydrolysiert man das Reaktionsgemisch ausschließlich mit der genannten wässrigen Base.

Im Allgemeinen setzt man daher die wässrige Base in einem Volumenverhältnis zum Reaktionsgemisch von 0,01 bis 100 und bevorzugt von 0,1 bis 10 ein.

Bei dem beim erfindungsgemäßen Verfahren einzusetzenden elementaren Alkalimetallen handelt es sich um Lithium, Natrium, Kalium, Rubidium, Cäsium oder um Legierungen enthaltend diese Alkalimetalle. Bevorzugt setzt man Lithium, Natrium oder Kalium und besonders bevorzugt Natrium ein.

Da die zugängliche Oberfläche des Alkalimetalls einen signifikanten Einfluss auf das Anspringverhalten der Reaktion, auf die Reaktionsgeschwindigkeit und somit auch auf die Raum-Zeit-Ausbeute hat, setzt man beim erfindungsgemäßen Verfahren im Allgemeinen zerkleinerte Alkalimetall-Partikel mit einer mittleren Partikelgröße von ≤ 5 mm ein. Unter der mittleren Partikelgröße ist der sogenannte "D50-Wert" ("Median-Wert") zu verstehen, also der Wert, bei dem 50% des gesamten Teilchenvolumens durch Partikel mit einem Durchmesser größer diesem Wert und 50% des gesamten Teilchenvolumens durch Partikel mit einem Durchmesser kleiner diesem Wert vorliegen. Im Allgemeinen ist die Reaktionsgeschwindigkeit um so höher, je feiner das Alkalimetall im Lösungsmittel dispergiert ist. Bevorzugt setzt man daher fein dispergiertes Alkalimetall ein, welches eine mittlere Partikelgröße von ≤ 500 µm, besonders bevorzugt von ≤ 200 µm und ganz besonders bevorzugt von ≤ 50 µm aufweist. Die Untergrenze ist letztendlich durch die theoretische atomare Verteilung des Alkalimetalls gegeben und liegt somit im Bereich eines Atomdurchmessers in der Größenordnung von 10⁻⁴ µm. Die in der Praxis durch schnelles Rühren mit hohem Leistungseintrag erreichbare mittlere Partikelgröße liegt im Allgemeinen von etwa 1 µm. Die Bestimmung der mittleren Partikelgröße erfolgt durch Laserbeugung unter vorheriger Einstellung eines "Obscuration"-Wertes von etwa 20%. Als geeignetes Meßgerät sei beispielhaft das Laserbeugungsgerät "Mastersizer 2000" der Firma Malvern genannt.

Das beim erfindungsgemäßen Verfahren bevorzugt einzusetzende fein dispergierte Alkalimetall kann beispielsweise in einfacher Art und Weise durch Dispergierung des Alkalimetalls in einem organischen aprotischen Lösungsmittel mithilfe eines schnelldrehenden Rührers mit hohem Leistungseintrag, beispielsweise einem Propellerrührer mit hohem Leistungseintrags, mithilfe eines Ultraturrax-Rührers, einer schnell drehenden Reaktions-Mischungspumpe oder einer Verdüsung erhalten werden. Um eine Oxidation des Alkalimetalls zu vermeiden arbeitet man unter Schutzgasatmosphäre, bevorzugt unter Stickstoff. Das Alkalimetall kann im Lösungsmittel aufgeschmolzen werden oder bereits in flüssiger Form zugegeben werden. Die Temperatur beträgt dabei beim Einsatz von Lithium ≥ 179°C, beispielsweise 179 bis 250°C, beim Einsatz von Natrium ≥ 97,8°C, beispielsweise 97,8 bis 200°C und beim Einsatz von Kalium ≥ 64°C, beispielsweise 64 bis 200°C. Die erhaltene Dispersion kann direkt durch Zusammenführen mit der Verbindung (II) umgesetzt werden. Sie kann aber auch auf eine Temperatur unterhalb des Schmelzpunktes des eingesetzten Alkalimetalls abgekühlt und bis zur Weiterverarbeitung zwischengelagert werden. Erfindungsgemäß wurde erkannt, dass die einmal durch Aufschmelzen und Dispergieren hergestellte Dispersion bei Temperaturen unterhalb des Schmelzpunktes des eingesetzten Alkalimetalls zumindest derart stabil ist, dass sie auch ohne weiteres Rühren zwischengelagert und später erfindungsgemäß auch ohne erneutes Aufschmelzen und ohne Einsatz eines besonders schnelldrehenden Rührers eingesetzt werden kann.

Beim erfindungsgemäßen Verfahren setzt man als organisches aprotisches Lösungsmittel bevorzugt
- ein 1- bis 6-fach durch C₁- bis C₆-Alkyl substituiertes Benzol, beispielsweise Toluol, Xylole oder Ethylbenzol;
- ein unverzweigtes oder verzweigtes C₆- bis C₁₂-Alkan, beispielsweise Hexan, Heptan, Octan, Nonan, Decan, Undecan oder Dodecan;
- ein unsubstituiertes oder durch C₁- bis C₆-Alkyl substituiertes C₆- bis C₁₂-Cyclo-alkan, beispielsweise Cyclohexan, Cylcoheptan oder Cyclooctan; oder
- einen aliphatischen Mono- oder Oligo-Ether mit 4 bis 30 Kohlenstoffatomen,
mit einem Siedepunkt unter Reaktionsbedingungen oberhalb des Schmelzpunktes des eingesetzten Alkalimetalls ein. Bevorzugte sind Ether der allgemeinen Formel (III)

R^{a}O-[(CH₂)ₙ-O]ₘ-R^{a} (III),

in der R^{a} für Methyl, Ethyl, 1-Propyl, 1-Butyl, 1-Pentyl, 1-Hexyl oder 1-Octyl steht, n gleich 2 oder 4 ist, m für 0 bis 6 steht und deren Siedepunkt unter Reaktionsbedingungen oberhalb des Schmelzpunktes des eingesetzten Alkalimetalls liegt. Als bevorzugte Ether seien beispielsweise Di-(1-butyl)ether (für Na und K), Di-(1-pentyl)ether (für Li, Na und K), Di-(1-hexyl)ether (für Li, Na und K), Di-(1-octyl)ether (für Li, Na und K), Ethylenglykoldimethylether (für K), Ethylenglykoldiethylether (für Na und K), Diethylenglycoldimethylether (für Na und K), Diethylenglycoldiethylether (für Li, Na und K), Triethylenglycoldimethylether (für Li, Na und K), Triethylenglycoldiethylether (für Li, Na und K), Butylenglykoldimethylether und Butylenglykoldiethylether genannt. Ganz besonders bevorzugt setzt man beim Einsatz von Natrium Di-(1-butyl)ether ein.

Das Volumen des einzusetzenden organischen aprotischen Lösungsmittels beträgt im Allgemeinen das 5 bis 100-fache und bevorzugt das 10 bis 50-fache des rechnerischen Volumens des einzusetzenden Alkalimetalls.

Die erfindungsgemäße Umsetzung führt man im Allgemeinen bei einer Temperatur von 50 bis 300°C und bevorzugt im Bereich vom Schmelzpunkt des eingesetzten Alkalimetalls bis 250°C durch. Der Druck beträgt im Allgemeinen 0,01 bis 10 MPa abs, bevorzugt 0,05 bis 5 MPa abs, besonders bevorzugt 0,095 bis 1 MPa abs und insbesondere 0,098 bis 0,2 MPa abs.

Die Menge des einzusetzenden Alkalimetalls richtet sich nach den molaren Mengen der einzusetzenden Verbindungen (1) und (II) und den darin enthaltenen Abgangsgruppen L¹ bis L⁴. Im Allgemeinen beträgt die theoretische Stöchiometrie zwischen dem Alkalimetall und den Abgangsgruppen 1:1. Für einige relevante Reaktionen sind die Reaktionsgleichungen im Folgenden wiedergegeben:

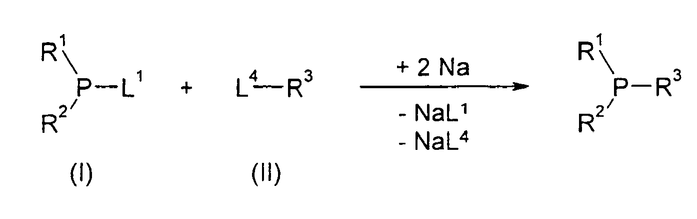

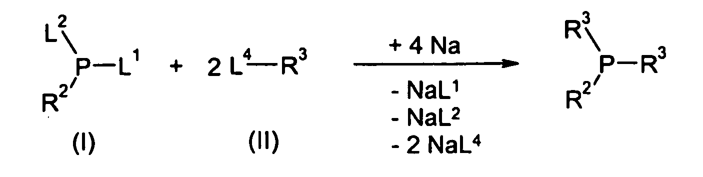

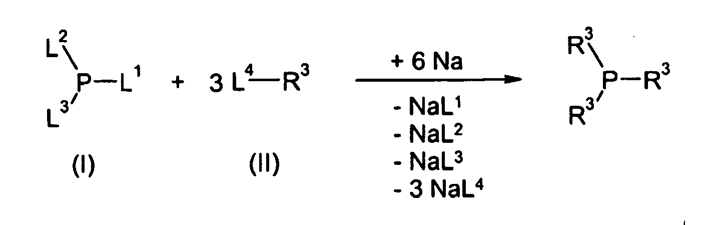

Bevorzugt setzt man das Alkalimetall in einem molaren Verhältnis zur Summe der Abgangsgruppen der Verbindungen (1) und (II) von 0,95 bis 1,2 und besonders bevorzugt von 1,0 bis 1,1 ein. Falls R³ selbst noch weitere Abgangsgruppen besitzt, was beispielsweise bei der Herstellung von Di- und Oligophosphinen der Fall ist, so sind diese Abgangsgruppen ebenfalls entsprechend zu berücksichtigen.

Beim erfindungsgemäßen Verfahren setzt man die Verbindungen (I) und (II) in einem Verhältnis ein, bei dem die Summe der Abgangsgruppen der Verbindung (I) zur Summe der Abgangsgruppen der Verbindung (11) 0,9 bis 1,1 und bevorzugt 0,98 bis 1,02 beträgt.

Als Reaktionsapparate zur Durchführung der Umsetzung eignen sich prinzipiell alle Reaktionsapparate, welche für flüssig/flüssig-Umsetzungen geeignet sind, beispielsweise Rührkessel oder Rührkesselkaskaden. Zur bevorzugten Herstellung der Alkalimetall-Dispersion ist es vorteilhaft einen Apparat einzusetzen, bei dem ein Ultraturrax-Rührer verwendet werden kann oder alternativ bei dem die Dispersion durch Verdüsung hergestellt werden kann.

Beim erfindungsgemäßen Verfahren bringt man bevorzugt das Alkalimetall im organischen aprotischen Lösungsmittel zuerst mit der Verbindung (I) und das erhaltene Gemisch anschließend mit der Verbindung (II) zusammen und das so erhaltene Reaktionsgemisch wird mit einer wässrigen Base, welche einen pH-Wert von ≥ 10 aufweist, hydrolysiert und die organische Phase wird von der wässrigen Phase abgetrennt. Dabei wird das Alkalimetall zunächst, wie zuvor bereits beschrieben, bevorzugt fein im Lösungsmittel dispergiert. Durch das Zusammenbringen des Alkalimetalls im organischen aprotischen Lösungsmittel mit der Verbindung (I) können beide Komponenten zusammen reagieren, wobei sich wahrscheinlich ein Phosphid als Zwischenstufe bildet. Um die Reaktion in dieser ersten Stufe zu fördern, belässt man im Allgemeinen das Gemisch nach dem Zusammenfügen für einige Zeit, beispielsweise über einen Zeitraum von wenigen Minuten bis mehreren Stunden, bevorzugt 5 Minuten bis 10 Stunden, bei der entsprechenden Reaktionstemperatur. In der zweiten Stufe bildet sich dann nach dem Zusammenbringen des Reaktionsgemisches der ersten Stufe mit der Verbindung (II) dann das gewünschte tertiäre Phosphin. Dabei ist eine besonders intensive Durchmischung, wie sie bei der Herstellung der Alkalimetall-Dispersion notwendig ist und im Allgemeinen auch noch in der ersten Stufe angewendet wird, in der zweiten Stufe nicht mehr erforderlich. Übliches Vermischen, wie bei flüssig/flüssig-Reaktionen ist in der zweiten Stufe in der Regel ausreichend. Um die Reaktion der zweiten Stufe zu fördern, belässt man im Allgemeinen das Reaktionsgemisch nach dem Zusammenfügen für einige Zeit, beispielsweise über einen Zeitraum von wenigen Minuten bis mehreren Stunden, bevorzugt 5 Minuten bis 10 Stunden, bei der entsprechenden Reaktionstemperatur. Anschließend kühlt man das Reaktionsgemisch im Allgemeinen ab, bevorzugt auf eine Temperatur im Bereich von 20 bis 80°C, besonders bevorzugt auf 30 bis 50°C und bringt das abgekühlte Reaktionsgemisch zur Hydrolyse mit der wässrigen Base zusammen. Dies geschieht bevorzugt unter Durchmischung. Nach der erfolgten Hydrolyse beendet man im Allgemeinen die Durchmischung und lässt beide Phasen trennen. Entsprechend der Dichten scheidet sich die wässrige Phase üblicherweise unten ab; die organische Phase befindet sich üblicherweise oben. Letztere trennt man dann von der wässrigen Phase ab. Aus der abgetrennten organischen Phase kann dann bei Bedarf das gewünschte tertiäre Phosphin gewonnen werden. Im Allgemeinen destilliert man hierzu das Lösungsmittel, bevorzugt im Vakuum, ab. Um das tertiäre Phosphin in gereinigter Form zu erhalten, ist es zweckmäßig, dieses einem anschließenden Reinigungsverfahren zu unterziehen. Ein geeignetes Reinigungsverfahren ist beispielsweise die Umkristallisation in einem geeigneten Lösungsmittel. Geeignete Lösungsmittel hierzu sind beispielsweise Alkohole wie etwa Methanol, Ethanol, Propanole oder Butanole und Ether, wie etwa THF oder Diethylether.

Das erfindungsgemäße Verfahren kann diskontinuierlich oder kontinuierlich durchgeführt werden.

Bei der kontinuierlichen Durchführung
(a) dispergiert man in einem Apparat das Alkalimetall im organischen aprotischen Lösungsmittel;
(b) führt die aus Schritt (a) erhaltene Dispersion in einem weiteren Apparat mit der Verbindung (I) zusammen;
(c) führt das aus Schritt (b) erhaltene Reaktionsgemisch in einem weiteren Apparat mit der Verbindung (II) zusammen;
(d) führt das aus Schritt (c) erhaltene Reaktionsgemisch in einem weiteren Apparat mit wässriger Base zusammen; und
(e) trennt die organsiche Phase nach erfolgter Phasentrennung ab.

An dieser Stelle sei darauf hingewiesen, dass die Alkalimetall-Dispersion auch für das kontinuierliche Verfahren batchweise hergestellt und durch Abkühlen auf eine Temperatur unterhalb des Schmelzpunktes des eingesetzten Alkalimetalls problemlos zwischengelagert werden kann. So kann ist es dann beispielsweise möglich, die Alkalimetall-Dispersion kontinuierlich aus einem durchmischten Vorratsgefäß zuzuführen.

Bei Schritt (b) werden beide Komponenten kontinuierlich zugeführt und bei der gewünschten Reaktionstemperatur miteinander vermischt. Im Allgemeinen ist es vorteilhaft, zwischen Schritt (b) und (c) einen weiteren Apparat als Verweilzeitbehälter zwischenzuschalten.

Bei Schritt (c) werden ebenfalls beide Komponenten kontinuierlich zugeführt und bei der gewünschten Reaktionstemperatur miteinander vermischt. Im Allgemeinen ist es auch hier vorteilhaft, zwischen Schritt (c) und (d) einen weiteren Apparat als Verweilzeitbehälter zwischenzuschalten.

Die Durchführung von Schritt (d) kann sowohl diskontinuierlich als auch kontinuierlich erfolgen. Bei der diskontinuierliche Durchführung von Schritt (d) kann man beispielsweise den aus Schritt (c) anfallenden Reaktionsstrom einem durchmischten Apparat, in dem die wässrige Base vorgelegt ist, zuführen, bis die gewünschte Menge erreicht ist. Das Zweiphasensytem wird dann wie unter (e) beschrieben aufgearbeitet. Der nachfolgende Reaktionsstrom aus Schritt (c) kann dann beispielsweise in einem zwischengeschalteten Verweilzeitbehälter zwischengelagert oder einem zweiten durchmischten Apparat zur Hydrolyse zugeführt werden.

Bei der kontinuierliche Durchführung von Schritt (d) kann man beispielsweise den aus Schritt (c) anfallenden Reaktionsstrom zusammen mit der wässrigen Base kontinuierlich einem durchmischten Apparat, in dem die wässrige Base vorgelegt ist, zuführen. Aus diesem kann beispielsweise durch einen Überlauf - oder alternativ auch durch einen oberen und unteren Überlauf - die Zweiphasensuspension kontinuierlich einem Phasentrenn-Apparat zugeführt werden und daraus die obere und unter Phase kontinuierlich zur weiteren Aufarbeitung entnommen werden.

In Formel (I) stehen die Reste R¹ und R² unabhängig voneinander für einen organischen Rest mit jeweils 1 bis 30 Kohlenstoffatomen, wobei die Reste R¹ und R² auch miteinander verbunden sein können. In Formel (II) steht der Rest R³ für einen organischen Rest mit jeweils 1 bis 30 Kohlenstoffatomen.

Unter einem organischen Rest mit 1 bis 30 Kohlenstoffatomen ist hierbei ein Kohlenstoff enthaltender organischer, gesättigter oder ungesättigter, acyclischer oder cyclischer, aliphatischer, aromatischer oder araliphatischer, unsubstituierter oder durch 1 bis 5 Heteroatome oder funktionelle Gruppen unterbrochener oder substituierter Rest mit 1 bis 30 Kohlenstoffatomen zu verstehen.

Als Heteroatome kommen bei der Definition der Reste R¹ bis R³ und L¹ bis L⁴ prinzipiell alle Heteroatome in Frage, welche in der Lage sind, formell eine -CH₂-, eine -CH=, eine -C≡ oder eine =C= -Gruppe zu ersetzen. Enthält der Kohlenstoff enthaltende Rest Heteroatome, so sind Sauerstoff, Stickstoff, Schwefel, Phosphor und Silizium bevorzugt. Als bevorzugte Gruppen seien insbesondere -O-, -S-, -SO-, -SO₂- -NR'-, -N=, - PR'-, -PR'₂ und -SiR'₂- genannt, wobei es sich bei den Resten R' um den verbleibenden Teil des Kohlenstoff enthaltenden Rests handelt.

Als funktionelle Gruppen kommen bei der Definition der Reste R¹ bis R³ und L¹ bis L⁴ prinzipiell alle funktionellen Gruppen in Frage, welche an ein Kohlenstoffatom oder ein Heteroatom gebunden sein können. Als geeignetes Beispiele sei =O (insbesondere als Carbonylgruppe) genannt. Fuktionelle Gruppen und Heteroatome können auch direkt benachbart sein, so dass auch Kombinationen aus mehreren benachbarten Atomen, wie etwa -O- (Ether), -S- (Thioether), -COO- (Ester) oder -CONR'- (tertiäres Amid), mit umfasst sind.

Bevorzugt stehen die Reste R¹ bis R² unabhängig voneinander für
- gegebenenfalls durch funktionelle Gruppen, Aryl, Alkyl, Aryloxy, Alkyloxy, Halogen, Heteroatome und/oder Heterocyclen substituiertes und/oder durch ein oder mehrere Sauerstoff- und/oder Schwefelatome unterbrochenes, unverzweigtes oder verzweigtes C₁- bis C₃₀-, bevorzugt C₁- bis C₂₀-Alkyl;
- gegebenenfalls durch funktionelle Gruppen, Aryl, Alkyl, Aryloxy, Alkyloxy, Halogen, Heteroatome und/oder Heterocyclen substituiertes C₆- bis C₁₂-Aryl;
- gegebenenfalls durch funktionelle Gruppen, Aryl, Alkyl, Aryloxy, Alkyloxy, Halogen, Heteroatome und/oder Heterocyclen substituiertes C₅- bis C₁₂-Cycloalkyl;
- gegebenenfalls durch funktionelle Gruppen, Aryl, Alkyl, Aryloxy, Alkyloxy, Halogen, Heteroatome und/oder Heterocyclen substituiertes und/oder durch ein oder mehrere Sauerstoff- und/oder Schwefelatome unterbrochenes, unverzweigtes oder verzweigtes C₁- bis C₃₀-, bevorzugt C₁- bis C₂₀-Alkyloxy;
- gegebenenfalls durch funktionelle Gruppen, Aryl, Alkyl, Aryloxy, Alkyloxy, Halogen, Heteroatome und/oder Heterocyclen substituiertes C₆- bis C₁₂-Aryloxy;
- gegebenenfalls durch funktionelle Gruppen, Aryl, Alkyl, Aryloxy, Alkyloxy, Halogen, Heteroatome und/oder Heterocyclen substituiertes C₅- bis C₁₂-Cycloalkyloxy; oder
- einen gegebenenfalls durch funktionelle Gruppen, Aryl, Alkyl, Aryloxy, Alkyloxy, Halogen, Heteroatome und/oder Heterocyclen substituierten fünf- bis sechsgliedrigen, Sauerstoff-, Stickstoff- und/oder Schwefelatome aufweisenden Heterocyclus bedeuten;
oder falls diese miteinander verbunden sind für
- einen ungesättigten, gesättigten oder aromatischen, gegebenenfalls durch funktionelle Gruppen, Aryl, Alkyl, Aryloxy, Alkyloxy, Halogen, Heteroatome und/oder Heterocyclen substituierten und gegebenenfalls durch ein oder mehrere Sauerstoff- und/oder Schwefelatome unterbrochenen Ring mit 4 bis 8 Atomen in der Ringkette und insgesamt 4 bis 50 Kohlenstoffatomen im gesamten diradikalischen Rest.

Bei gegebenenfalls durch funktionelle Gruppen, Aryl, Alkyl, Aryloxy, Alkyloxy, Halogen, Heteroatome und/oder Heterocyclen substituiertem C₁- bis C₃₀-Alkyl handelt es sich bevorzugt um Methyl, Ethyl, 1-Propyl, 2-Propyl, 1-Butyl, 2-Butyl, 2-Methyl-1-propyl (Isobutyl), 2-Methyl-2-propyl (tert.-Butyl), 1-Pentyl, 2-Pentyl, 3-Pentyl, 2-Methyl-1-butyl, 3-Methyl-1-butyl, 2-Methyl-2-butyl, 3-Methyl-2-butyl, 2,2-Dimethyl-1-propyl, 1-Hexyl, 2-Hexyl, 3-Hexyl, 2-Methyl-1-pentyl, 3-Methyl-1-pentyl, 4-Methyl-1-pentyl, 2-Methyl-2-pentyl, 3-Methyl-2-pentyl, 4-Methyl-2-pentyl, 2-Methyl-3-pentyl, 3-Methyl-3-pentyl, 2,2-Dimethyl-1-butyl, 2,3-Dimethyl-1-butyl, 3,3-Dimethyl-1-butyl, 2-Ethyl-1-butyl, 2,3-Dimethyl-2-butyl, 3,3-Dimethyl-2-butyl, Heptyl, Octyl, 2-Ethylhexyl, 2,4,4-Trimethylpentyl, 1,1,3,3-Tetramethylbutyl, 1-Nonyl, 1-Decyl, 1-Undecyl, 1-Dodecyl, 1-Tridecyl, 1-Tetradecyl, 1-Pentadecyl, 1-Hexadecyl, 1-Heptadecyl, 1-Octadecyl, Cyclopentylmethyl, 2-Cyclopentylethyl, 3-Cyclopentylpropyl, Cyclohexylmethyl, 2-Cyclohexylethyl, 3-Cyclohexylpropyl, Benzyl (Phenylmethyl), Diphenylmethyl (Benzhydryl), Triphenylmethyl, 1-Phenylethyl, 2-Phenylethyl, 3-Phenylpropyl, α,α-Dimethylbenzyl, p-Tolylmethyl oder 1-(p-Butylphenyl)-ethyl.

Bei gegebenenfalls durch funktionelle Gruppen, Aryl, Alkyl, Aryloxy, Alkyloxy, Halogen, Heteroatome und/oder Heterocyclen substituiertes C₆- bis C₁₂-Aryl handelt es sich bevorzugt um Phenyl, Tolyl, Xylyl, α-Naphthyl, β-Naphthyl, 4-Diphenylyl, Methylphenyl, Dimethylphenyl, Trimethylphenyl, Ethylphenyl, Diethylphenyl, *iso*-Propylphenyl, tert.-Butylphenyl, Dodecylphenyl, Methylnaphthyl, Isopropylnaphthyl, 2,6-Dimethylphenyl oder 2,4,6-Trimethylphenyl.

Bei gegebenenfalls durch funktionelle Gruppen, Aryl, Alkyl, Aryloxy, Alkyloxy, Halogen, Heteroatome und/oder Heterocyclen substituiertes C₅- bis C₁₂-Cycloalkyl handelt es sich bevorzugt um Cyclopentyl, Cyclohexyl, Cyclooctyl, Cyclododecyl, Methylcyclopentyl, Dimethylcyclopentyl, Methylcyclohexyl, Dimethylcyclohexyl, Diethylcyclohexyl, Butylcyclohexyl sowie ein gesättigtes oder ungesättigtes bicyclisches System wie z.B. Norbornyl oder Norbornenyl.

Bei gegebenenfalls durch funktionelle Gruppen, Aryl, Alkyl, Aryloxy, Alkyloxy, Halogen, Heteroatome und/oder Heterocyclen substituiertes und/oder durch ein oder mehrere Sauerstoff- und/oder Schwefelatome unterbrochenes, unverzweigtes oder verzweigtes C₁- bis C₃₀-, bevorzugt C₁- bis C₂₀-Alkyloxy handelt es sich bevorzugt um Methyloxy, Ethyloxy, 1-Propyloxy, 1-Butyloxy, 1-Pentyloxy oder 1-Hexyloxy.

Bei gegebenenfalls durch funktionelle Gruppen, Aryl, Alkyl, Aryloxy, Alkyloxy, Halogen, Heteroatome und/oder Heterocyclen substituiertes C₆- bis C₁₂-Aryloxy handelt es sich bevorzugt um Phenyloxy.

Bei gegebenenfalls durch funktionelle Gruppen, Aryl, Alkyl, Aryloxy, Alkyloxy, Halogen, Heteroatome und/oder Heterocyclen substituiertes C₅- bis C₁₂-Cycloalkyloxy handelt es sich bevorzugt um Cyclopentyloxy, Cyclohexyloxy oder Cyclooctyloxy.

Bei einen gegebenenfalls durch funktionelle Gruppen, Aryl, Alkyl, Aryloxy, Alkyloxy, Halogen, Heteroatome und/oder Heterocyclen substituierten fünf- bis sechsgliedrigen, Sauerstoff-, Stickstoff- und/oder Schwefelatome aufweisenden Heterocyclus handelt es sich bevorzugt um Furyl, Thiophenyl, Pyrryl, Pyridyl, Indolyl, Imidazolyl, Benzoxazolyl, Dioxolyl, Dioxyl, Benzimidazolyl, Benzthiazolyl, Dimethylpyridyl, Methylchinolyl, Dimethylpyrryl, Methoxyfuryl, Dimethoxypyridyl oder Difluorpyridyl.

Sind die Reste R¹ und R² miteinander verbunden, handelt es sich bevorzugt um 1,4-Butylen, 1,5-Pentylen, 1,6-Hexylen, 1,8-Octylen, 3-Oxa-1,5-pentylen, 1,4-Buta-1,3-dienylen oder 2,2'-Biphenylen.

Besonders bevorzugt stehen die Reste R¹ und R² unabhängig voneinander für C₁- bis C₂₀-Alkyl, C₇- bis C₂₀-Arylalkyl, C₆- bis C₁₀-Aryl, C₇- bis C₁₄-Alkylaryl, C₅- bis C₁₂-Cycloalkyl, C₆- bis C₁₂-Alkylcycloalkyl, C₁- bis C₂₀-Alkyloxy, C₆- bis C₁₂-Aryloxy, C₇- bis C₁₄-Alkylaryloxy, C₅- bis C₁₂-Cycloalkyloxy und C₅- bis C₁₂-Alkylcycloalkyloxy. Als besonders bevorzugte Reste seien Methyl, Ethyl, 1-Propyl, 2-Propyl, 1-Butyl, 2-Butyl, 2-Methyl-1-propyl (isobutyl), 2-Methyl-2-propyl (tert.-Butyl), 1-Pentyl, 2-Pentyl, 3-Pentyl, 2-Methyl-1-butyl, 3-Methyl-1-butyl, 2-Methyl-2-butyl, 3-Methyl-2-butyl, 2,2-Dimethyl-1-propyl, 1-Hexyl, 2-Hexyl, 3-Hexyl, 2-Methyl-1-pentyl, 3-Methyl-1-pentyl, 4-Methyl-1-pentyl, 2-Methyl-2-pentyl, 3-Methyl-2-pentyl, 4-Methyl-2-pentyl, 2-Methyl-3-pentyl, 3-Methyl-3-pentyl, 2,2-Dimethyl-1-butyl, 2,3-Dimethyl-1-butyl, 3,3-Dimethyl-1-butyl, 2-Ethyl-1-butyl, 2,3-Dimethyl-2-butyl, 3,3-Dimethyl-2-butyl, Heptyl, Octyl, 2-Ethylhexyl, 2,4,4-Trimethylpentyl, 1,1,3,3-Tetramethylbutyl, 1-Nonyl, 1-Decyl, 1-Undecyl, 1-Dodecyl, 1-Tridecyl, 1-Tetradecyl, 1-Pentadecyl, 1-Hexadecyl, 1-Heptadecyl, 1-Octadecyl, Phenyl, o-Tolyl, m-Tolyl, p-Tolyl, 2,3-Xylyl, 2,4-Xylyl, 2,5-Xylyl, 2,6-Xylyl, 3,4-Xylyl, 3,5-Xylyl, α-Naphthyl, β-Naphthyl, Cyclopentyl, Cyclohexyl, Cyclooctyl, Methyloxy, Ethyloxy, 1-Propyloxy, 1-Butyloxy, Phenyloxy, Cyclopentyloxy, Cyclohexyloxy und Cyclooctyloxy genannt.

Ganz besonders bevorzugt stehen die Reste R¹ und R² für Phenyl.

In Formel (I) stehen die Abgangsgruppen L¹ bis L³ unabhängig voneinander für Halogen, Alkyloxy mit 1 bis 10 Kohlenstoffatomen oder Aryloxy mit 6 bis 10 Kohlenstoffatomen.

Als Halogene seien Fluor, Chlor, Brom und Iod genannt.

Bevorzugt stehen die Abgangsgruppen L¹ bis L³ unabhängig voneinander für
- Chlor oder Brom;
- gegebenenfalls durch funktionelle Gruppen, Aryl, Alkyl, Aryloxy, Alkyloxy, Halogen, Heteroatome und/oder Heterocyclen substituiertes und/oder durch ein oder mehrere Sauerstoff- und/oder Schwefelatome unterbrochenes, unverzweigtes oder verzweigtes C₁- bis C₁₀-, bevorzugt C₁- bis C₆-Alkyloxy; oder
- gegebenenfalls durch funktionelle Gruppen, Aryl, Alkyl, Aryloxy, Alkyloxy, Halogen, Heteroatome und/oder Heterocyclen substituiertes C₆- bis C₁₀-Aryloxy.

Bei gegebenenfalls durch funktionelle Gruppen, Aryl, Alkyl, Aryloxy, Alkyloxy, Halogen, Heteroatome und/oder Heterocyclen substituiertes und/oder durch ein oder mehrere Sauerstoff- und/oder Schwefelatome unterbrochenes, unverzweigtes oder verzweigtes C₁- bis C₁₀-Alkyloxy handelt es sich bevorzugt um Methyloxy, Ethyloxy, 1-Propyloxy, 1-Butyloxy, 1-Pentyloxy oder 1-Hexyloxy.

Bei gegebenenfalls durch funktionelle Gruppen, Aryl, Alkyl, Aryloxy, Alkyloxy, Halogen, Heteroatome und/oder Heterocyclen substituiertes C₆- bis C₁₀-Aryloxy handelt es sich bevorzugt um Phenyloxy.

Besonders bevorzugt stehen die Abgangsgruppen L¹ bis L³ unabhängig voneinander für Chlor, Brom, Methyloxy, Ethyloxy und Phenyloxy, insbesondere für Chlor.

Bei der beim erfindungsgemäßen Verfahren einzusetzenden Verbindung (I) handelt es sich konkret um Verbindungen der allgemeinen Formeln (Ia) bis (Ic)

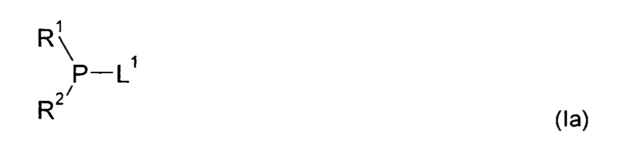

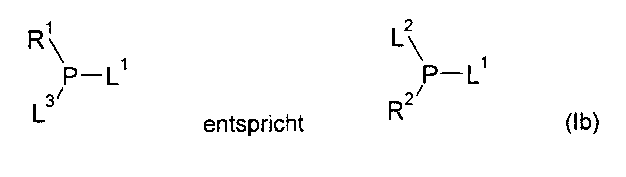

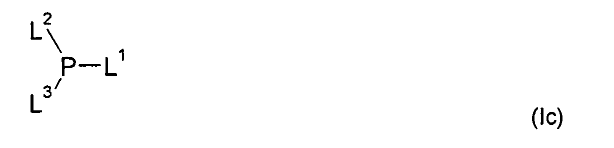

Entsprechend der besonders bevorzugten Reste R¹ und R² sowie der Abgangsgruppen L¹ bis L³ setzt man beim erfindungsgemäßen Verfahren als Verbindung (I) besonders bevorzugt Diphenylchlorophosphin, Diphenylbromophosphin, Diphenylmethoxyphosphin, Diphenylethoxyphosphin, Diphenylphenoxyphosphin, Phenyldichlorophosphin, Phenyldibromophosphin, Phenyldimethoxyphosphin, Phenyldiethoxyphosphin, Phenyldiphenoxyphosphin, Trichlorophosphin (Phosphortrichlorid) und Tribromophosphin (Phosphortribromid) ein.

In Formel (II) steht der Rest R³ für einen organischen Rest mit jeweils 1 bis 30 Kohlenstoffatomen. Hinsichtlich des Begriffs "organischer Rest mit jeweils 1 bis 30 Kohlenstoffatomen" sei auf die bereits zuvor genannte Definition verwiesen.

Bevorzugt steht der Rest R³ für
- gegebenenfalls durch funktionelle Gruppen, Aryl, Alkyl, Aryloxy, Alkyloxy, Halogen, Heteroatome und/oder Heterocyclen substituiertes und/oder durch ein oder mehrere Sauerstoff- und/oder Schwefelatome unterbrochenes, unverzweigtes oder verzweigtes C₁- bis C₃₀-, bevorzugt C₁- bis C₂₀-Alkyl;
- gegebenenfalls durch funktionelle Gruppen, Aryl, Alkyl, Aryloxy, Alkyloxy, Halogen, Heteroatome und/oder Heterocyclen substituiertes C₆- bis C₁₂-Aryl; oder
- gegebenenfalls durch funktionelle Gruppen, Aryl, Alkyl, Aryloxy, Alkyloxy, Halogen, Heteroatome und/oder Heterocyclen substituiertes C₅- bis C₁₂-Cycloalkyl.

Sollen beim erfindungsgemäßen Verfahren Di- und Oligophosphine als tertiäre Phosphine hergestellt werden, so enthält der Rest R³ bevorzugt zusätzlich eine oder mehrere Abgangsgruppen vom Typ L⁴.

Bei gegebenenfalls durch funktionelle Gruppen, Aryl, Alkyl, Aryloxy, Alkyloxy, Halogen, Heteroatome und/oder Heterocyclen substituiertem C₁- bis C₃₀-Alkyl handelt es sich bevorzugt um Methyl, Ethyl, 1-Propyl, 2-Propyl, 1-Butyl, 2-Butyl, 2-Methyl-1-propyl (Isobutyl), 2-Methyl-2-propyl (tert.-Butyl), 1-Pentyl, 2-Pentyl, 3-Pentyl, 2-Methyl-1-butyl, 3-Methyl-1-butyl, 2-Methyl-2-butyl, 3-Methyl-2-butyl, 2,2-Dimethyl-1-propyl, 1-Hexyl, 2-Hexyl, 3-Hexyl, 2-Methyl-1-pentyl, 3-Methyl-1-pentyl, 4-Methyl-1-pentyl, 2-Methyl-2-pentyl, 3-Methyl-2-pentyl, 4-Methyl-2-pentyl, 2-Methyl-3-pentyl, 3-Methyl-3-pentyl, 2,2-Dimethyl-1-butyl, 2,3-Dimethyl-1-butyl, 3,3-Dimethyl-1-butyl, 2-Ethyl-1-butyl, 2,3-Dimethyl-2-butyl, 3,3-Dimethyl-2-butyl, Heptyl, Octyl, 2-Ethylhexyl, 2,4,4-Trimethylpentyl, 1,1,3,3-Tetramethylbutyl, 1-Nonyl, 1-Decyl, 1-Undecyl, 1-Dodecyl, 1-Tridecyl, 1-Tetradecyl, 1-Pentadecyl, 1-Hexadecyl, 1-Heptadecyl, 1-Octadecyl, Chlormethyl, 2-Chlorethyl, 3-Chlorpropyl, 4-Chlorbutyl, 5-Chlorpentyl, 6-Chlorhexyl, Brommethyl, 2-Bromethyl, 3-Brompropyl, 4-Brombutyl, 5-Brompentyl, 6-Bromhexyl, 3-Chlor-2,2-dimethylpropyl, 3-Brom-2,2-dimethyl-propyl, 3-Chlor-2-methyl-2-chlormethyl-propyl, 3-Brom-2-methyl-2-brommethyl-propyl, 3-Chlor-2-ethyl-2-chlormethyl-propyl, 3-Brom-2-ethyl-2-brommethyl-propyl, Cyclopentylmethyl, 2-Cyclopentylethyl, 3-Cyclopentylpropyl, Cyclohexylmethyl, 2-Cyclohexylethyl, 3-Cyclohexylpropyl, Benzyl (Phenylmethyl), Diphenylmethyl (Benzhydryl), Triphenylmethyl, 1-Phenylethyl, 2-Phenylethyl, 3-Phenylpropyl, 2-Chlormethylphenyl-methyl, 2-Brommethylphenyl-methyl, 3-Chlormethylphenyl-methyl, 3-Brommethylphenyl-methyl, 4-Chlormethylphenyl-methyl, 4-Brommethylphenyl-methyl, α,α-Dimethylbenzyl, p-Tolylmethyl oder 1-(p-Butylphenyl)-ethyl. Zudem umfasst der genannte Oberbegriff aufgrund seiner Definition ("gegebenenfalls durch funktionelle Gruppen ... substituiert") für den Fall, dass das erste Kohlenstoffatom eine =O-Gruppe trägt auch gegebenenfalls durch funktionelle Gruppen, Aryl, Alkyl, Aryloxy, Alkyloxy, Halogen, Heteroatome und/oder Heterocyclen substituierte C₁- bis C₃₀-Acylreste, wie beispielsweise Acetyl, Benzoyl oder 2,4,6-Trimethylbenzoyl.

Bei gegebenenfalls durch funktionelle Gruppen, Aryl, Alkyl, Aryloxy, Alkyloxy, Halogen, Heteroatome und/oder Heterocyclen substituiertes C₆- bis C₁₂-Aryl handelt es sich bevorzugt um Phenyl, Tolyl, Xylyl, α-Naphthyl, β-Naphthyl, 4-Diphenylyl, Methylphenyl, Dimethylphenyl, Trimethylphenyl, Ethylphenyl, Diethylphenyl, *iso*-Propylphenyl, tert.-Butylphenyl, Dodecylphenyl, 2-Chlorphenyl, 2-Bromphenyl, 3-Chlorphenyl, 3-Bromphenyl, 4-Chlorphenyl, 4-Bromphenyl, Methylnaphthyl, Isopropylnaphthyl, 2,6-Dimethylphenyl oder 2,4,6-Trimethylphenyl.

Bei gegebenenfalls durch funktionelle Gruppen, Aryl, Alkyl, Aryloxy, Alkyloxy, Halogen, Heteroatome und/oder Heterocyclen substituiertes C₅- bis C₁₂-Cycloalkyl handelt es sich bevorzugt um Cyclopentyl, Cyclohexyl, Cyclooctyl, Cyclododecyl, Methylcyclopentyl, Dimethylcyclopentyl, Methylcyclohexyl, Dimethylcyclohexyl, Diethylcyclohexyl, Butylcyclohexyl sowie ein gesättigtes oder ungesättigtes bicyclisches System wie z.B. Norbornyl oder Norbornenyl.

Besonders bevorzugt steht der Rest R³ für C₁- bis C₂₀-Alkyl, C₇- bis C₂₀-Arylalkyl, C₆-bis C₁₀-Aryl, C₇- bis C₁₄-Alkylaryl, C₅- bis C₁₂-Cycloalkyl, C₆- bis C₁₂-Alkylcycloalkyl oder deren einfach oder mehrfach durch Chlor, Brom, Methyloxy, Ethyloxy oder Phenyloxy substituierte Derivate. Als besonders bevorzugte Reste seien Phenyl, Chlormethyl, 2-Chlorethyl, 3-Chlorpropyl, 4-Chlorbutyl, 5-Chlorpentyl, 6-Chlorhexyl, Brommethyl, 2-Bromethyl, 3-Brompropyl, 4-Brombutyl, 5-Brompentyl, 6-Bromhexyl, 3-Chlor-2,2-dimethyl-propyl, 3-Brom-2,2-dimethyl-propyl, 3-Chlor-2-methyl-2-chlormethyl-propyl, 3-Brom-2-methyl-2-brommethyl-propyl, 3-Chlor-2-ethyl-2-chlormethyl-propyl, 3-Brom-2-ethyl-2-brommethyl-propyl, 2-Chlorphenyl, 2-Bromphenyl, 3-Chlorphenyl, 3-Bromphenyl, 4-Chlorphenyl, 4-Bromphenyl, 2-Chlormethylphenyl-methyl, 2-Brommethylphenyl-methyl, 3-Chlormethylphenyl-methyl, 3-Brommethylphenyl-methyl, 4-Chlormethylphenyl-methyl, 4-Brommethylphenyl-methyl und als ganz besonders bevorzugte Reste 3-Chlorpropyl, 3-Brompropyl, 3-Chlor-2-methyl-2-chlormethyl-propyl, 3-Chlor-2-ethyl-2-chlormethyl-propyl und 3-Chlor-2,2-dimethyl-propyl genannt.

In Formel (II) steht die Abgangsgruppe L⁴ für Halogen, Alkyloxy mit 1 bis 10 Kohlenstoffatomen oder Aryloxy mit 6 bis 10 Kohlenstoffatomen.

Als Halogene seien Fluor, Chlor, Brom und Iod genannt.

Bevorzugt steht die Abgangsgruppe L⁴ für
- Chlor oder Brom;
- gegebenenfalls durch funktionelle Gruppen, Aryl, Alkyl, Aryloxy, Alkyloxy, Halogen, Heteroatome und/oder Heterocyclen substituiertes und/oder durch ein oder mehrere Sauerstoff- und/oder Schwefelatome unterbrochenes, unverzweigtes oder verzweigtes C₁- bis C₁₀-, bevorzugt C₁- bis C₆-Alkyloxy; oder
- gegebenenfalls durch funktionelle Gruppen, Aryl, Alkyl, Aryloxy, Alkyloxy, Halogen, Heteroatome und/oder Heterocyclen substituiertes C₆- bis C₁₀-Aryloxy.

Bei gegebenenfalls durch funktionelle Gruppen, Aryl, Alkyl, Aryloxy, Alkyloxy, Halogen, Heteroatome und/oder Heterocyclen substituiertes und/oder durch ein oder mehrere Sauerstoff- und/oder Schwefelatome unterbrochenes, unverzweigtes oder verzweigtes C₁- bis C₁₀-Alkyloxy handelt es sich bevorzugt um Methyloxy, Ethyloxy, 1-Propyloxy, 1-Butyloxy, 1-Pentyloxy oder 1-Hexyloxy.

Bei gegebenenfalls durch funktionelle Gruppen, Aryl, Alkyl, Aryloxy, Alkyloxy, Halogen, Heteroatome und/oder Heterocyclen substituiertes C₆- bis C₁₀-Aryloxy handelt es sich bevorzugt um Phenyloxy.

Besonders bevorzugt steht die Abgangsgruppe L⁴ für Chlor, Brom, Methyloxy, Ethyloxy und Phenyloxy, insbesondere für Chlor.

Entsprechend des besonders bevorzugten Rests R³ sowie der besonders bevorzugten Abgangsgruppe L⁴ setzt man beim erfindungsgemäßen Verfahren als Verbindung (II) besonders bevorzugt Chlorbenzol, Dichlormethan, Dibrommethan, 1,2-Dichlorethan, 1,2-Dibromethan, 1,3-Dichlorpropan, 1,3-Dibrompropan, 1,3-Bromchlorpropan, 1,4-Dichlorbutan, 1,4-Dibrombutan, 1,5-Dichlorpentan, 1,5-Dibrompentan, 1,6-Dichlorhexan, 1,6-Dibromhexan, 1,3-Dichlor-2,2-dimethyl-propan, 1,3-Dibrom-2,2-dimethyl-propan, 1,3-Dichlor-2-methyl-2-chlormethyl-propan, 1,3-Dibrom-2-methyl-2-brommethyl-propan, 1,3-Dichlor-2-ethyl-2-chlormethyl-propan, 1,3-Dibrom-2-ethyl-2-brommethyl-propan, 1,2-Dichlorbenzol, 1,2-Dibrombenzol, 1,3-Dichlorbenzol, 1,3-Dibrombenzol, 1,4-Dichlorbenzol, 1,4-Dibrombenzol, 1,2-Bis(chlormethyl)-benzol, 1,2-Bis(brommethyl)-benzol, 1,3-Bis(chlormethyl)-benzol, 1,3-Bis(brommethyl)-benzol, 1,4-Bis(chlormethyl)-benzol und 1,4-Bis(brommethyl)-benzol ein.

Ganz besonders bevorzugt setzt man beim erfindungsgemäßen Verfahren als Verbindung (II) 1,3-Bromchlorpropan, 1,3-Dichlor-2-methyl-2-chlormethyl-propan, 1,3-Dichlor-2-ethyl-2-chlormethyl-propan und 1,3-Dichlor-2,2-dimethyl-propan ein.

Bevorzugt stellt man beim erfindungsgemäßen Verfahren tertiäre Mono-, Di-, Tri- und Tetraphosphine und besonders bevorzugt Mono-, Di- und Triphosphine her.

In einer bevorzugten Ausführungsform zur diskontinuierlichen Herstellung tertiärer Phosphine dispergiert man unter Schutzgas die gewünschte Menge an Natrium in der gewünschten Menge eines aprotischen organischen Lösungsmittels der allgemeinen Formel (III) durch Aufheizen auf eine Temperatur oberhalb des Schmelzpunktes von Natrium und intensive Durchmischung mithilfe eines Ultraturrax-Rührers. In diese intensiv vermischte Dispersion gibt man nun langsam die Verbindung (I) zu und rührt anschließend noch für eine gewisse Zeit nach. Nun gibt man unter weiterer intensiver Durchmischung langsam die Verbindung (II) zu und rührt ebenfalls noch für eine gewisse Zeit nach. Das erhaltene Reaktionsgemisch gibt man nun langsam unter Rühren in bereitgestellte Natronlauge, welche einen ursprünglichen pH-Wert von ≥ 10 aufweist. Nach der erfolgten Hydrolyse lässt man beide Phasen voneinander abscheiden und trennt die obere, organische Phase ab. Aus dieser destilliert man dann im Vakuum die leichtflüchtigen Komponenten (insbesondere das eingesetzte Lösungsmittel (III) ab und gewinnt das gewünschte tertiäre Phosphin aus dem erhaltenen Rohprodukt, beispielsweise durch Umkristallisation.

In einer bevorzugten Ausführungsform zur kontinuierlichen Herstellung tertiärer Phosphine dispergiert man unter Schutzgas die gewünschte Menge an Natrium in der gewünschten Menge eines aprotischen organischen Lösungsmittels der allgemeinen Formel (III) durch Aufheizen auf eine Temperatur oberhalb des Schmelzpunktes von Natrium und intensive Durchmischung mithilfe eines Rührers mit hohem Leistungseintrag. Falls vorhanden, kann das Alkalimetall bereits in flüssiger Form in das auf die gewünschte Temperatur aufgeheizte Lösungsmittel unter intensivem Rühren eingebracht werden. Bei Bedarf ist es möglich, die Dispersion auf eine Temperatur unterhalb des Schmelzpunktes von Natrium abzukühlen und beispielsweise in einem Vorratsgefäß zwischenzulagern. Die Natrium-Dispersion, frisch hergestellt oder zwischengelagert, wird nun zusammen mit der Verbindung (I) kontinuierlich einem weiteren Apparat zugeführt und intensiv durchmischt. Der Überlauf dieses Apparats wird kontinuierlich in einen Verweilzeitbehälter überführt und daraus zusammen mit der Verbindung (II) kontinuierlich einem weiteren Apparat zugeführt und intensiv durchmischt. Der Überlauf dieses Apparats wird kontinuierlich in einen Verweilzeitbehälter überführt und daraus kontinuierlich einem weiteren Apparat zur Hydrolyse mit Natronlauge, welche einen ursprünglichen pH-Wert von ≥ 10 aufweist, zugeführt. Wie bereits beschrieben, kann die Hydrolyse sowohl diskontinuierlich als auch kontinuierlich erfolgen. Nach der erfolgten Hydrolyse lässt man beide Phasen voneinander abscheiden und trennt die obere, organische Phase ab. Aus dieser destilliert man dann im Vakuum die leichtflüchtigen Komponenten (insbesondere das eingesetzte Lösungsmittel (III)) ab und gewinnt das gewünschte tertiäre Phosphin aus dem erhaltenen Rohprodukt, beispielsweise durch Umkristallisation.

Das erfindungsgemäße Verfahren ermöglicht die Herstellung tertiärer Phosphine, welches eine hohe Flexiblität hinsichtlich der chemischen Natur der herzustellenden tertiären Phosphine aufweist und insbesondere auch die Herstellung asymmetrisch substituierter Phosphine sowie von Di- und Oligophosphinen gestattet, eine hohe Ausbeute, hohe Reinheit und hohe Raum-Zeit-Ausbeute der gewünschten tertiären Phosphine ermöglicht, sicherheitstechnisch gut beherrschbar ist und auch die Produktion technischer Mengen im Bereich von einigen Kilogramm bis zu mehreren Tonnen pro Tag möglich macht. Durch die erfindungsgemäße Hydrolyse mit einer wässrigen Base, welche einen pH-Wert von ≥ 10, gemessen bei 25°C, aufweist, wird die Exothermie der Hydrolyse deutlich verringert und somit das Risiko einer unkontrollierten Wasserstoffentwicklung sowie einer lokalen Überhitzung mit der Folge eines unkontrollierten Siedeverzugs deutlich vermindert. Zudem kann das erfindungsgemäße Verfahren ohne Zusatz von Aktivatoren oder Stabilisatoren ausgeführt werden.

### Beispiele

### Beispiel 1: Diskontinuierliche Herstellung von 1,3-Bis-(diphenylphosphino)-propan

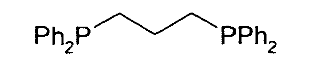

In einem 2,5 L-Rührkessel wurden unter Stickstoffatmosphäre 90,6 g (3,94 Mol) Natrium in 1800 mL Di-(1-butyl)ether vorgelegt, auf 105°C aufgeheizt und 15 Minuten mit einem Ultraturrax-Rührer bei 4000 Umdrehungen pro Minute dispergiert, so dass die mittlere Natrium-Partikelgröße ≤ 200 µm betrug. Anschließend wurden unter weiterem Rühren mit dem Ultraturrax-Rührer innerhalb einer Stunde 373 g (1,79 Mol) flüssiges Diphenylchlorophosphin zugegeben und eine weitere Stunde bei 105°C gerührt. Daraufhin wurden innerhalb einer Stunde 141,0 g (896 mMol) 1,3-Bromchlorpropan zugetropft und eine weitere Stunde bei 105°C nachgerührt. Nun wurde auf Raumtemperatur abgekühlt und die erhaltene Suspension zur Hydrolyse in 1200 mL 10 Gew.-%iger (2,5 Mol/L) Natronlauge gegeben. Nach der erfolgten Phasentrennung wurde die obere, organische Phase abgetrennt und das Lösungsmittel im Vakuum abdestilliert. Das ölige Rohprodukt wurde abschließend in Ethanol umkristallisiert. Es wurden 351 g Produkt erhalten. Eine ¹H-NMR und ³¹P-NMR spektroskopische Analyse sowie GC-Analyse bestätigte den Erhalt von 1,3-Bis-(diphenylphosphino)-propan in >98%-iger Reinheit. Daraus ergibt sich eine Ausbeute von 95%. Der Schmelzpunkt der erhaltenen Kristalle lag bei 60-63°C.

### Beispiel 2: Diskontinuierliche Herstellung von 1,1,1-Tris-(diphenylphosphinomethyl)-ethan

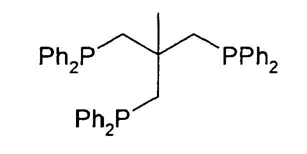

In einem 500 mL-Rundkolben wurden unter Stickstoffatmosphäre 13,7 g (590 mMol) Natrium in 180 mL Di-(1-butyl)ether vorgelegt, auf 105°C aufgeheizt und 15 Minuten mit einem Ultraturrax-Rührer bei 13500 Umdrehungen pro Minute dispergiert, so dass die mittlere Natrium-Partikelgröße ≤ 200 µm betrug. Anschließend wurden unter weiterem Rühren mit dem Ultraturrax-Rührer innerhalb einer Stunde 59,6 g (270 mMol) flüssiges Diphenylchlorophosphin zugegeben und eine weitere Stunde bei 105°C gerührt. Daraufhin wurden innerhalb einer Stunde 15,8 g (90,0 mMol) 1,3-Dichloro-2-(chlormethyl)-2-methylpropan zugetropft und eine weitere Stunde bei 105°C nachgerührt. Nun wurde auf Raumtemperatur abgekühlt und die erhaltene Suspension zur Hydrolyse in 150 mL 10 Gew.-%iger (2,5 Mol/L) Natronlauge gegeben. Nach der erfolgten Phasentrennung wurde die obere, organische Phase abgetrennt und das Lösungsmittel im Vakuum abdestilliert. Das ölige Rohprodukt wurde abschließend in Ethanol umkristallisiert. Es wurden 56,2 g Produkt erhalten. Eine ¹H-NMR und ³¹P-NMR spektroskopische Analyse bestätigte den Erhalt von 1-Tris-(diphenylphosphinomethyl)-ethan in >98%-iger Reinheit. Daraus ergibt sich eine Ausbeute von 87%. Der Schmelzpunkt der erhaltenen Kristalle lag bei 98°C.

### Beispiel 3: Diskontinuierliche Herstellung von 1,1,1-Tris-(diphenylphosphinomethyl)-propan

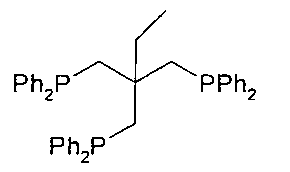

In einem 1000mL-Rundkolben wurden unter Stickstoffatmosphäre 17,4 g (758 mMol) Natrium in 330 mL Di-(1-butyl)ether vorgelegt, auf 105°C aufgeheizt und 15 Minuten mit einem Ultraturrax-Rührer bei 17500 Umdrehungen pro Minute dispergiert, so dass die mittlere Natrium-Partikelgröße ≤ 200 µm betrug. Anschließend wurden unter weiterem Rühren mit dem Ultraturrax-Rührer innerhalb einer Stunde 75,26 g (341 mMol) flüssiges Diphenylchlorophosphin zugegeben und eine weitere Stunde bei 105°C gerührt. Daraufhin wurden innerhalb einer Stunde 21,57 g (114 mMol) 1,3-Dichlor-2-ethyl-2-chlormethyl-propan gelöst in 50 ml Di-(1-butyl)ether zugetropft und eine weitere Stunde bei 105°C nachgerührt. Nun wurde auf Raumtemperatur abgekühlt und die erhaltene Suspension zur Hydrolyse in 330 mL 10 Gew.-%iger (2,5 Mol/L) Natronlauge gegeben. Nach der erfolgten Phasentrennung wurde die obere, organische Phase abgetrennt und das Lösungsmittel im Vakuum abdestilliert. Das ölige Rohprodukt wurde abschließend in Ethanol umkristallisiert. Es wurden 56.8 g Produkt erhalten. Eine ¹H-NMR und ³¹P-NMR spektroskopische Analyse bestätigte den Erhalt von 1-Tris-(diphenylphosphinomethyl)-propan in >98%-iger Reinheit. Daraus ergibt sich eine Ausbeute von 78%. Der Schmelzpunkt der erhaltenen Kristalle lag bei 99-100°C.

### Beispiel 4: Kontinuierliche Herstellung von 1,3-Bis-(diphenylphosphino)-2,2-dimethylpropan

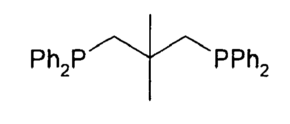

In einem 250 mL-Rührkessel wurden unter Stickstoffatmosphäre 120 g/h (5,22 Mol/h) flüssiges Natrium in 3074 g/h Di-(1-butyl)ether bei 130°C zugeführt und mit einem Ultraturrax-Rührer bei 11000 Umdrehungen pro Minute dispergiert, so dass die mittlere Natrium-Partikelgröße ≤ 200 µm betrug. Über einen Überlauf wurde die Suspension kontinuierlich in einen 2,5 L-Rührkessel befördert, in dem bei 130°C unter Rühren bei 600 bis 1000 Umdrehungen pro Minute 519 g/h (2,35 Mol/h) Diphenylchlorophosphin zudosiert wurden. Aus diesem Rührkessel wurde das Gemisch ebenfalls über einen Überlauf kontinuierlich in einen 750 mL-Rührkessel befördert, in dem bei 130°C unter Rühren bei 800 bis 1200 Umdrehungen pro Minute 165 g/h (1,17 Mol/h) 1,3-Dichloro-2,2-dimethylpropan zudosiert wurden. Das erhaltene Reaktionsgemisch wurde kontinuierlich in einen 750 mL-Nachreaktor befördert, welcher bei 90°C betrieben wurde. Von dort aus wurde das Reaktionsgemisch kontinuierlich in einen nachgeschalteten Behälter gefördert und darin auf Raumtemperatur abgekühlt. Das im nachgeschalteten Behälter gesammelte Reaktionsgemisch wurde dann diskontinuierlich in 10 Gew.-%iger (2,5 Mol/L) Natronlauge hydrolysiert, wobei das eingesetzte Volumen der wässrigen Natronlauge dem eingesetzten Volumen des Di-(1-butyl)ethers entsprach. Nach der erfolgten Phasentrennung wurde die obere, organische Phase abgetrennt und das Lösungsmittel im Vakuum abdestilliert. Das ölige Rohprodukt wurde abschließend in Methanol umkristallisiert. Es wurden 515 g/h Produkt erhalten. Eine ¹H-NMR und ³¹P-NMR spektroskopische Analyse bestätigte den Erhalt von 1,3-Bis-(diphenylphosphino)-2,2-dimethylpropan in >98%-iger Reinheit. Daraus ergibt sich eine Ausbeute von 85%. Der Schmelzpunkt der erhaltenen Kristalle lag bei 90°C.

## Patentansprüche

1. Verfahren zur Herstellung tertiärer Phosphine durch Umsetzung einer Verbindung der allgemeinen Formel (I) 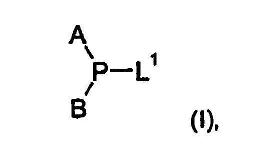 in der
- A für R¹ oder L²,
- B für R² oder L³,
- die Reste R¹ und R² unabhängig voneinander für einen organischen Rest mit jeweils 1 bis 30 Kohlenstoffatomen, wobei die Reste R¹ und R² auch miteinander verbunden sein können; und
- die Abgangsgruppen L¹ bis L³ unabhängig voneinander für Halogen, Alkyloxy mit 1 bis 10 Kohlenstoffatomen oder Aryloxy mit 6 bis 10 Kohlenstoffatomen
stehen,
(a) mit einem Alkalimetall in einem organischen aprotischen Lösungsmittel und
(b) einer Verbindung der allgemeinen Formel (II)
L⁴― R³ (II),
in der
- der Rest R³ für einen organischen Rest mit jeweils 1 bis 30 Kohlenstoffatomen; und
- die Abgangsgruppe L⁴ für Halogen, Alkyloxy mit 1 bis 10 Kohlenstoffatomen oder Aryloxy mit 6 bis 10 Kohlenstoffatomen
stehen,
**dadurch gekennzeichnet, dass** man das Alkalimetall im organischen aprotischen Lösungsmittel zuerst mit der Verbindung (I) und das erhaltene Gemisch anschließend mit der Verbindung (II) zusammenbringt, und dass man das so erhaltene Reaktionsgemisch mit einer wässrigen Base, welche einen pH-Wert von ≥ 10 aufweist, hydrolysiert und die organische Phase von der wässrigen Phase abtrennt.

2. Verfahren nach Anspruch 1, **dadurch gekennzeichnet, dass** man eine wässrige Base einsetzt, welche eine pH-Wert von 10 bis 15, gemessen bei 25°C, aufweist.

3. Verfahren nach den Ansprüchen 1 bis 2, **dadurch gekennzeichnet, dass** man als wässrige Base eine wässrige Alkalilauge einsetzt.

4. Verfahren nach den Ansprüchen 1 bis 3, **dadurch gekennzeichnet, dass** man die wässrige Base in einem Volumenverhältnis zum Reaktionsgemisch von 0,01 bis 100 einsetzt.

5. Verfahren nach den Ansprüchen 1 bis 4, **dadurch gekennzeichnet, dass** man als Alkalimetall Lithium, Natrium oder Kalium einsetzt.

6. Verfahren nach den Ansprüchen 1 bis 5, **dadurch gekennzeichnet, dass** man fein dispergiertes Alkalimetall einsetzt, welches eine mittlere Partikelgröße von ≤ 500 µm aufweist.

7. Verfahren nach den Ansprüchen 1 bis 6, **dadurch gekennzeichnet, dass** man als organisches aprotisches Lösungsmittel einen aliphatischen Mono- oder Oligo-Ether mit 4 bis 30 Kohlenstoffatomen und einem Siedepunkt unter Reaktionsbedingungen oberhalb des Schmelzpunktes des eingesetzten Alkalimetalls einsetzt.

8. Verfahren nach den Ansprüchen 1 bis 7, **dadurch gekennzeichnet, dass** man die Umsetzung bei einer Temperatur im Bereich vom Schmelzpunkt des eingesetzten Alkalimetalls bis 250°C durchführt.

9. Verfahren nach den Ansprüchen 1 bis 8, **dadurch gekennzeichnet, dass** man die Umsetzung bei einem Druck von 0,05 bis 5 MPa abs durchführt.

10. Verfahren nach den Ansprüchen 1 bis 9, **dadurch gekennzeichnet, dass** man das Alkalimetall in einem molaren Verhältnis zur Summe der Abgangsgruppen der Verbindungen (II) und (III) von 0,95 bis 1,2 einsetzt.

11. Verfahren nach den Ansprüchen 1 bis 10, **dadurch gekennzeichnet, dass** man die Verbindungen (I) und (II) in einem Verhältnis einsetzt, bei dem die Summe der Abgangsgruppen der Verbindung (I) zur Summe der Abgangsgruppen der Verbindung (II) 0,9 bis 1,1 beträgt.

12. Verfahren nach den Ansprüchen 1 bis 11, **dadurch gekennzeichnet, dass** man das Verfahren kontinuierlich durchführt.

13. Verfahren nach Anspruch 12, **dadurch gekennzeichnet, dass** man
(a) in einem Apparat das Alkalimetall im organischen aprotischen Lösungsmittel dispergiert;
(b) die aus Schritt (a) erhaltene Dispersion in einem weiteren Apparat mit der Verbindung (I) zusammenführt;
(c) das aus Schritt (b) erhaltene Reaktionsgemisch in einem weiteren Apparat mit der Verbindung (II) zusammenführt;
(d) das aus Schritt (c) erhaltene Reaktionsgemisch in einem weiteren Apparat mit wässriger Base zusammenführt; und
(e) die organsiche Phase nach erfolgter Phasentrennung abtrennt.

14. Verfahren nach den Ansprüchen 1 bis 13, **dadurch gekennzeichnet, dass** man als Reste R¹ und R² unabhängig voneinander C₁- bis C₂₀-Alkyl, C₇- bis C₂₀-Arylalkyl, C₆- bis C₁₀-Aryl, C₇- bis C₁₄-Alkylaryl, C₅- bis C₁₂-Cycloalkyl, C₆- bis C₁₂-Alkylcycloalkyl, C₁- bis C₂₀-Alkyloxy. C₆- bis C₁₂-Aryloxy, C₇- bis C₁₄-Alkylaryloxy, C₅- bis C₁₂-Cycloalkyloxy oder C₅- bis C₁₂-Alkylcycloalkyloxy einsetzt.

15. Verfahren nach den Ansprüchen 1 bis 14, **dadurch gekennzeichnet, dass** man als Abgangsgruppen L¹ bis L³ unabhängig voneinander Chlor, Brom, Methyloxy, Ethyloxy oder Phenyloxy einsetzt.

16. Verfahren nach den Ansprüchen 1 bis 15, **dadurch gekennzeichnet, dass** man als Rest R³ C₁- bis C₂₀-Alkyl, C₇- bis C₂₀-Arylalkyl, C₆- bis C₁₀-Aryl, C₇- bis C₁₄-Alkylaryl, C₅- bis C₁₂-Cycloalkyl, C₆- bis C₁₂-Alkylcycloalkyl oder deren einfach oder mehrfach durch Chlor, Brom, Methyloxy, Ethyloxy oder Phenyloxy substituierte Derivate einsetzt.

17. Verfahren nach den Ansprüchen 1 bis 16, **dadurch gekennzeichnet, dass** man als Abgangsgruppe L⁴ Chlor, Brom, Methyloxy, Ethyloxy oder Phenyloxy einsetzt.

## Claims

1. A process for preparing tertiary phosphines by reacting a compound of the general formula (I) 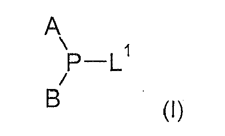 in which
- A is R¹ or L²,
- B is R² or L³,
- the R¹ and R² radicals are each independently an organic radical having in each case from 1 to 30 carbon atoms, where the R¹ and R² radicals may also be joined together; and
- the leaving groups L¹ to L³ are each independently halogen, alkyloxy having from 1 to 10 carbon atoms or aryloxy having from 6 to 10 carbon atoms
(a) with an alkali metal in an organic aprotic solvent and
(b) a compound of the general formula (II)
L⁴― R³ (II)
in which
- the R³ radical is an organic radical having in each case from 1 to 30 carbon atoms; and
- the leaving group L⁴ is halogen, alkyloxy having from 1 to 10 carbon atoms or aryloxy having from 6 to 10 carbon atoms,
which comprises first combining the alkali metal in the organic aprotic solvent with the compound (I) and then the resulting mixture with the compound (II), and hydrolyzing the resulting reaction mixture with an aqueous base which has a pH of ≥ 10, and removing the organic phase from the aqueous phase.

2. The process according to claim 1, wherein an aqueous base is used which has a pH of from 10 to 15 measured at 25°C.

3. The process according to claims 1 to 2, wherein the aqueous base used is an aqueous alkali metal hydroxide solution.

4. The process according to claims 1 to 3, wherein the aqueous base is used in a volume ratio relative to the reaction mixture of from 0.01 to 100.

5. The process according to claims 1 to 4, wherein the alkali metal used is lithium, sodium or potassium.

6. The process according to claims 1 to 5, wherein finely dispersed alkali metal which has an average particle size of ≤ 500 µm is used.

7. The process according to claims 1 to 6, wherein the organic aprotic solvent used is an aliphatic mono- or oligoether having from 4 to 30 carbon atoms and a boiling point under reaction conditions above the melting point of the alkali metal used.

8. The process according to claims 1 to 7, wherein the reaction is carried out at a temperature in the range from the melting point of the alkali metal used to 250°C.

9. The process according to claims 1 to 8, wherein the reaction is carried out at a pressure of from 0.05 to 5 MPa abs.

10. The process according to claims 1 to 9, wherein the alkali metal is used in a molar ratio relative to the sum of the leaving groups of the compounds (II) and (III) of from 0.95 to 1.2.

11. The process according to claims 1 to 10, wherein the compounds (I) and (II) are used in a ratio at which the sum of the leaving groups of the compound (I) to the sum of the leaving groups of the compound (II) is from 0.9 to 1.1.

12. The process according to claims 1 to 11, which is carried out continuously.

13. The process according to claim 12, wherein
(a) the alkali metal is dispersed in the organic aprotic solvent in one apparatus;
(b) the dispersion obtained from step (a) is combined with the compound (I) in a further apparatus;
(c) the reaction mixture obtained from step (b) is combined with the compound (II) in a further apparatus;
(d) the reaction mixture obtained from step (c) is combined with aqueous base in a further apparatus; and
(e) the organic phase is removed after the phases have been separated.

14. The process according to claims 1 to 13, wherein the R¹ and R² radicals used are each independently C₁- to C₂₀-alkyl, C₇- to C₂₀-arylalkyl, C₆- to C₁₀-aryl, C₇- to C₁₄-alkylaryl, C₅- to C₁₂-cycloalkyl, C₆- to C₁₂-alkylcycloalkyl, C₁- to C₂₀-alkyloxy, C₆- to C₁₂-aryloxy, C₇- to C₁₄-alkylaryloxy, C₅- to C₁₂-cycloalkyloxy or C₅- to C₁₂-alkylcycloalkyloxy.

15. The process according to claims 1 to 14, wherein the leaving groups L¹ to L³ used are each independently chlorine, bromine, methyloxy, ethyloxy or phenyloxy.

16. The process according to claims 1 to 15, wherein the R³ radical used is C₁- to C₂₀-alkyl, C₇- to C₂₀-arylalkyl, C₆- to C₁₀-aryl, C₇- to C₁₄-alkylaryl, C₅- to C₁₂-cycloalkyl, C₆- to C₁₂-alkylcycloalkyl or their mono- or poly-chlorine-, -bromine-, -methyloxy-, -ethyloxy- or -phenyloxy-substituted derivatives.

17. The process according to claims 1 to 16, wherein the leaving group L⁴ used is chlorine, bromine, methyloxy, ethyloxy or phenyloxy.

## Revendications

1. Procédé de préparation de phosphines tertiaires par réaction d'un composé de formule générale (I) 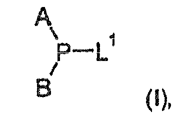 dans laquelle :
- A représente R¹ ou L²,
- B représente R² ou L³,
- les radicaux R¹ et R² représentent indépendamment l'un de l'autre un radical organique avec chaque fois 1 à 30 atomes de carbone, les radicaux R¹ et R² pouvant être également reliés l'un à l'autre; et
- les groupes de départ L¹ à L³ représentent indépendamment l'un de l'autre un halogène, un alkyloxy avec 1 à 10 atomes de carbone ou aryloxy avec 6 à 10 atomes de carbone,
(a) avec un métal alcalin dans un solvant organique aprotique, et
(b) un composé de formule générale (II)
L⁴― R³ (II),
dans laquelle :
- le radical R³ représente un radical organique avec chaque fois 1 à 30 atomes de carbone, et
- le groupe de départ L⁴ représente un halogène, un alkyloxy avec 1 à 10 atomes de carbone ou un aryloxy avec 6 à 10 atomes de carbone,
**caractérisé en ce qu'**on met ensemble le métal alcalin dans un solvant aprotique organique d'abord avec le composé (I) et le mélange obtenu ensuite avec le composé (II), et **en ce qu'**on hydrolyse le mélange réactionnel ainsi obtenu avec une base aqueuse, laquelle présente un pH de ≥ 10 et on sépare la phase organique de la phase aqueuse.

2. Procédé selon la revendication 1, **caractérisé en ce qu'**on utilise une base aqueuse qui présente un pH de 10 à 15, mesuré à 25°C.

3. Procédé selon les revendications 1 à 2, **caractérisé en ce qu'**on utilise comme base aqueuse une lessive aqueuse alcaline.

4. Procédé selon les revendications 1 à 3, **caractérisé en ce qu'**on utilise la base aqueuse dans un rapport volumique au mélange réactionnel de 0,01 à 100.

5. Procédé selon les revendications 1 à 4, **caractérisé en ce qu'**on utilise comme métal alcalin le lithium, le sodium ou le potassium.

6. Procédé selon les revendications 1 à 5, **caractérisé en ce qu'**on utilise un métal alcalin finement dispersé qui présente une grosseur moyenne de particules ≤ 500 µm.

7. Procédé selon les revendications 1 à 6, **caractérisé en ce qu'**on emploie comme solvant organique aprotique, un mono- ou oligoéther aliphatique avec 4 à 30 atomes de carbone et un point d'ébullition dans les conditions réactionnelles au-dessus du point de fusion du métal alcalin utilisé.

8. Procédé selon les revendications 1 à 7, **caractérisé en ce qu'**on effectue la réaction à une température dans l'intervalle compris entre le point de fusion du métal alcalin utilisé et 250°C.

9. Procédé selon les revendications 1 à 8, **caractérisé en ce qu'**on effectue la réaction à une pression de 0,05 à 5 MPa absolu.

10. Procédé selon les revendications 1 à 9, **caractérisé en ce qu'**on emploie le métal alcalin dans un rapport molaire à la somme des groupes de départ des composés (II) et (III) de 0,95 à 1,2.

11. Procédé selon les revendications 1 à 10, **caractérisé en ce qu'**on utilise les composés (I) et (II) dans un rapport où la somme des groupes de départ du composé (I) à la somme des groupes de départ du composé (II) est de 0,9 à 1,1.

12. Procédé selon les revendications 1 à 11, **caractérisé en ce qu'**on effectue le procédé en mode continu.

13. Procédé selon la revendication 12, **caractérisé en ce que** :
(a) on disperse dans un appareil le métal alcalin dans un solvant aprotique organique;
(b) on conduit la dispersion obtenue à l'étape (a) dans un autre appareil avec le composé (I);
(c) on conduit le mélange réactionnel obtenu à l'étape (b) dans un autre appareil avec le composé (II);
(d) on conduit le mélange réactionnel obtenu à l'étape (c) dans un autre appareil avec la base aqueuse, et
(e) on sépare la phase organique à la fin de la séparation des phases.

14. Procédé selon les revendications 1 à 13 **caractérisé en ce qu'**on utilise comme radicaux R¹ et R ² indépendamment l'un de l'autre un alkyle en C₁-C₂₀, un arylalkyle en C₇-C₂₀, un aryle en C₆-C₁₀, un alkylaryle en C₇-C₁₄, un cycloalkyle en C₅-C₁₂, un alkylcycloalkyle en C₆-C₁₂, un alkyloxy en C₁-C₂₀, un aryloxy en C₆-C₁₂, un alkylaryloxy en C₇-C₁₄, un cycloalkyloxy en C₅-C₁₂ ou un alkylcycloalkyloxy en C₅-C₁₂.

15. Procédé selon les revendications 1 à 14, **caractérisé en ce qu'**on utilise comme groupes de départ L¹ à L³ indépendamment l'un de l'autre le chlore, le brome, un méthyloxy, un éthyloxy ou un phényloxy.

16. Procédé selon les revendications 1 à 15, **caractérisé en ce qu'**on utilise comme radical R³, un alkyle en C₁-C₂₀, un arylalkyle en C₇-C₂₀, un aryle en C₆-C₁₀, un alkylaryle en C₇-C₁₄, un cycloalkyle en C₅-C₁₂, un alkylcycloalkyle en C₆-C₁₂ ou leurs dérivés substitués une ou plusieurs fois par le chlore, le brome, un méthyloxy, un éthyloxy ou un phényloxy.

17. Procédé selon les revendications 1 à 16, **caractérisé en ce qu'**on utilise comme groupe de départ L⁴ le chlore, le brome, un méthyloxy, un éthyloxy ou un phényloxy.
